# EUROPEAN PATENT APPLICATION

(11) **EP 4 775 960 A2**
(43) Date of publication of application: **15.07.2026**
(21) Application number: 25227277.8
(22) Date of filing: 25.12.2025
(51) Int. Cl.: G01N 21/39, G01N 21/03, G01J 3/42

(54) **DETECTING GAS CELL DEGRADATION IN DUAL COMB SPECTROSCOPY**

(30) Priority: 13.01.2025 IN 202511002939; 18.12.2025 US 202519425475
(71) Applicant: Honeywell International Inc., Charlotte, NC 28202 (US)
(72) Inventor: VARTAK, Sameer Dinkar, Charlotte, 28202 (US); SAINI, Hitesh, Charlotte, 28202 (US); TRIPATHY, Janmejaya, Charlotte, 28202 (US)
(74) Representative: Haseltine Lake Kempner LLP

(57) **Abstract**

The present disclosure provides a method for determining an effective path length of a gas cell in dual frequency comb spectroscopy. The method comprises introducing a tracer gas of known concentration and absorption spectrum into the gas cell, emitting laser light from a dual frequency comb into the gas cell, receiving the laser light, determining a signal corresponding to absorption by the tracer gas, and determining the effective path length using the signal and known tracer gas concentration. The tracer gas may be selected such that its absorption spectrum does not interfere with target gases. The method enables accurate gas concentration determination by accounting for effective path length changes due to misalignment, dust, or other factors degrading gas cell performance.

## Description

### CROSS-REFERENCE TO RELATED APPLICATIONS

This application claims priority to India Patent Application No. 202511002939, titled DETECTING BLOCKAGE/DEGRADATION OF GAS CELL PERFORMANCE IN DUAL COMB SPECTROSCOPY, filed January 13, 2025, which is hereby incorporated by reference in its entirety.

### FIELD OF INVENTION

The present disclosure relates to dual frequency comb spectroscopy systems, and more particularly to methods for detecting blockage or degradation of gas cell performance by determining effective path length in dual comb spectroscopy applications.

### BACKGROUND

Dual frequency comb spectroscopy (DFCS) has emerged as a powerful analytical technique for detecting concentrations of multiple gases simultaneously through measurement of high-resolution absorption spectra. This spectroscopic method offers advantages over traditional single-wavelength approaches by providing broadband spectral coverage and high measurement precision across multiple gas species in a single measurement cycle.

To achieve detection sensitivity at low gas concentrations, DFCS systems typically employ gas cells with extended optical path lengths. These gas cells, such as Herriott cells or resonant cavity gas cells, utilize multiple reflections between highly reflective mirrors to increase the effective distance that light travels through the gas sample. The extended path length enhances the absorption signal strength, thereby improving the detection limits for trace gas analysis.

Accurate determination of gas concentrations in spectroscopic measurements depends on precise knowledge of the optical path length through the gas sample. The relationship between absorption signal strength and gas concentration is directly proportional to the path length, making path length determination a fundamental parameter for quantitative analysis. In conventional gas cells with fixed geometries, the path length can be determined from the physical dimensions and optical configuration.

However, gas cells with extended path lengths, particularly those employing resonant cavities, can experience variations in effective path length during operation. Factors such as mirror misalignment, dust accumulation on optical surfaces, or changes in mirror reflectivity can alter the number of reflections and reduce the effective optical path length. These changes may occur gradually over time or result from environmental conditions, potentially affecting measurement accuracy without obvious external indication of degradation.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Various embodiments described herein relate to methods for determining an effective path length of a gas cell in dual frequency comb (DFC) spectroscopy.

According to an aspect of the present disclosure, a method for determining an effective path length of a gas cell in dual frequency comb spectroscopy is provided. The method comprises introducing a tracer gas of a known concentration and a known absorption spectrum into the gas cell. The method comprises emitting laser light from a dual frequency comb into the gas cell. The method comprises receiving the laser light from the gas cell. The method comprises determining, using the received laser light, a signal corresponding to absorption of the laser light by the tracer gas. The method comprises determining the effective path length of the gas cell using the determined signal and the known concentration of the tracer gas.

According to other aspects of the present disclosure, the method may include one or more of the following features. The tracer gas may be selected such that the known absorption spectrum of the tracer gas does not interfere with a known absorption spectrum of any one of one or more target gases. The method may further comprise measuring a concentration of the tracer gas in ambient air, wherein introducing the tracer gas into the gas cell comprises introducing the ambient air into the gas cell. The tracer gas may comprise humidity in the ambient air. The method may further comprise determining, using the received laser light, one or more signals corresponding to absorption of one or more target gases, and determining a concentration of each of the one or more target gases in the gas cell using the determined effective path length of the gas cell and the determined one or more signals. Introducing the tracer gas into the gas cell may comprise introducing enough of the tracer gas to purge ambient air from the gas cell. The gas cell may comprise a resonant gas cell.

According to another aspect of the present disclosure, a method for determining an effective path length of a gas cell in dual frequency comb spectroscopy is provided. The method comprises emitting laser light into the gas cell. The method comprises receiving the laser light from the gas cell. The method comprises determining a decay constant of the laser light. The method comprises determining the effective path length of the gas cell using the determined decay constant.

According to other aspects of the present disclosure, the method may include one or more of the following features. A wavelength of the laser light may be selected such that the wavelength of the laser light does not interfere with a known absorption spectrum of any one of one or more target gases. The laser light may be emitted from the dual frequency comb or from a laser light source separate from the dual frequency comb. The method may further comprise determining, using the received laser light, one or more signals corresponding to absorption of one or more target gases, and determining a concentration of each of the one or more target gases in the gas cell using the determined effective path length of the gas cell and the determined one or more signals. The method may further comprise, prior to emitting laser light into the gas cell, purging gas from the gas cell. The method may further comprise, prior to emitting laser light into the gas cell, introducing nitrogen gas into the gas cell. The gas cell may comprise a resonant gas cell.

According to another aspect of the present disclosure, a method for determining an effective path length of a gas cell in dual frequency comb spectroscopy is provided. The method comprises emitting laser light at a plurality of different wavelengths into the gas cell. The method comprises receiving the laser light from the gas cell. The method comprises determining two or more resonances of the laser light. The method comprises determining a finesse of the gas cell. The method comprises determining the effective path length of the gas cell using the determined finesse.

According to other aspects of the present disclosure, the method may include one or more of the following features. The finesse of the gas cell may be determined as a distance between two adjacent ones of the two or more resonances divided by a width of one of the two or more resonances. The gas cell may comprise a Fabry-Perot gas cell. The plurality of different wavelengths of the laser light may be selected such that the wavelengths of the laser light do not interfere with a known absorption spectrum of any one of one or more target gases. The laser light may be emitted from the dual frequency comb or from a laser light source separate from the dual frequency comb. The method may further comprise determining, using the received laser light, one or more signals corresponding to absorption of one or more target gases, and determining a concentration of each of the one or more target gases in the gas cell using the determined effective path length of the gas cell and the determined one or more signals.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1 illustrates a simplified side view of a spectroscopy gas cell, according to aspects of the present disclosure.
FIG. 2 illustrates a flowchart for a method of determining effective path length using a tracer gas, according to aspects of the present disclosure.
FIG. 3 illustrates a flowchart for a method of determining effective path length using a decay constant, according to aspects of the present disclosure.
FIG. 4 illustrates a flowchart for a method of determining effective path length using resonance measurements, according to aspects of the present disclosure.
FIG. 5 illustrates block diagram of a control device for dual comb spectroscopy, according to aspects of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures are embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase is included in at least one embodiment of the present disclosure and is included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase is included in at least one example of the present disclosure and is included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature is optionally included in some examples, or it is excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information is transmitted to and/or received from these elements or components.

The term "component" may refer to an article, a device, or an apparatus that may comprise one or more surfaces, portions, layers and/or elements. For example, an example component may comprise one or more substrates that provide underlying layer(s) for the component and may comprise one or more elements that may form part of and/or are disposed on top of the substrate. In the present disclosure, the term "element" may refer to an article, a device, or an apparatus that may provide one or more functionalities.

Dual frequency comb spectroscopy (DFCS) systems provide a powerful technique for detecting concentrations of multiple gases simultaneously through measurement of high-resolution spectra. DFCS systems may be particularly useful for detecting toxic gases at parts per billion (PPB) concentration levels in safety applications, such as semiconductor manufacturing environments where precise monitoring of hazardous substances may be required.

To achieve detection at low gas concentrations, DFCS systems may utilize gas cells with extended optical path lengths. These gas cells may include Herriott cells or resonant cavity gas cells that employ highly reflective mirrors to increase the effective path length through which light travels. In some cases, spectroscopy gas cells may achieve path lengths of up to kilometer lengths by utilizing mirrors with high reflectivity that allow light to bounce between the mirrors multiple times before exiting the cell.

The accuracy of gas concentration measurements in DFCS systems depends on precise knowledge of the effective path length within the gas cell. Gas concentration may be determined based on the relationship between the measured absorption signal, the known absorption characteristics of the target gas, and the path length through which the light travels. When the effective path length changes from its expected value, the calculated gas concentration may become inaccurate.

Several factors may cause variations in the effective path length of gas cells during operation. Misalignment of mirrors within the gas cell may alter the number of reflections that occur, thereby changing the total distance that light travels through the gas sample. Dust accumulation on mirror surfaces may reduce the reflectivity of the mirrors, leading to increased optical losses and a reduction in the effective path length. Scattering from particles or other contaminants within the gas cell may also contribute to optical losses that affect the effective path length.

In safety applications, accurate gas concentration measurements may be particularly important for monitoring compliance with time limit value (TLV) requirements for toxic gas exposure. When the effective path length of a gas cell decreases due to degradation or blockage, the system may underestimate the actual concentration of toxic gases present, potentially leading to unsafe conditions. Conversely, overestimation of gas concentrations due to path length variations may result in unnecessary safety responses or system shutdowns.

The challenge of maintaining accurate path length knowledge becomes more pronounced in resonant cavity gas cells, where the effective path length may not correspond directly to the physical spacing between mirrors. In these systems, the effective path length may depend on factors such as mirror reflectivity, cavity alignment, and the presence of optical losses within the cavity. Changes in any of these factors may alter the effective path length without causing obvious physical changes to the gas cell structure.

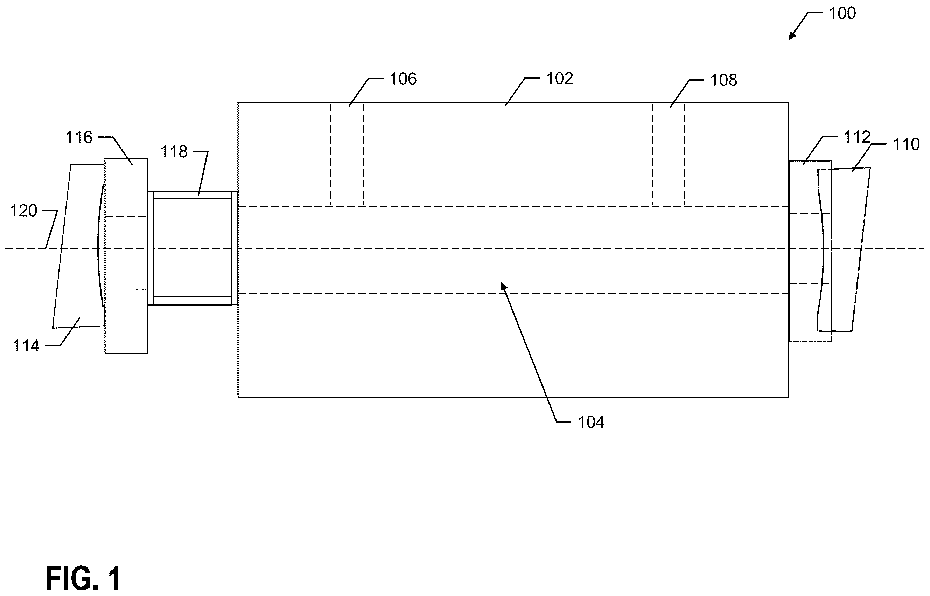

Referring to FIG. 1, a spectroscopy gas cell 100 may be configured to provide extended optical path lengths for dual frequency comb spectroscopy applications. The spectroscopy gas cell 100 may include a cylindrical body 102 that defines a chamber 104 for containing gas samples during spectroscopic analysis. The cylindrical body 102 may provide structural support and containment for the optical components and gas flow systems within the spectroscopy gas cell 100.

The spectroscopy gas cell 100 may include an inlet 106 and an outlet 108 to facilitate controlled gas flow through the spectroscopy gas cell 100. The inlet 106 may allow introduction of gas samples or tracer gases into the chamber 104, while the outlet 108 may enable removal of gases from the chamber 104. In some cases, the inlet 106 and outlet 108 may be configured to maintain a continuous flow of gas through the chamber 104 during spectroscopic measurements.

As shown in FIG. 1, the spectroscopy gas cell 100 may include a first mirror 110 and a second mirror 114 positioned at opposite ends of the chamber 104. The first mirror 110 may be mounted within a first mirror fixture 112, and the second mirror 114 may be mounted within a second mirror fixture 116. The first mirror fixture 112 and the second mirror fixture 116 may provide structural support and positioning for the respective mirrors within the cylindrical body 102. In some cases, the first mirror fixture 112 and the second mirror fixture 116 may be configured to maintain precise alignment of the mirrors during operation.

The spectroscopy gas cell 100 may include a piezoelectric positioner 118 coupled to the first mirror fixture 112 to enable precise adjustment of the first mirror 110 position. The piezoelectric positioner 118 may allow for fine control of mirror alignment and positioning within the chamber 104. In some cases, the piezoelectric positioner 118 may be used to optimize the optical coupling and alignment of the spectroscopy gas cell 100 during operation.

With continued reference to FIG. 1, an optical axis 120 may extend through the center of the chamber 104 between the first mirror 110 and the second mirror 114. The optical axis 120 may define the primary path along which light travels during spectroscopic measurements. The first mirror 110 and the second mirror 114 may be positioned to enable light to reflect multiple times between the mirrors, thereby increasing the effective path length for gas absorption measurements.

The spectroscopy gas cell 100 may be configured as a Herriott cell where light makes N number of bounces before exiting the cell. In Herriott cell configurations, the light may follow a specific pattern of reflections between the first mirror 110 and the second mirror 114, with the total number of bounces determining the effective path length through the gas sample. The effective path length may be significantly greater than the physical distance between the mirrors due to the multiple reflections that occur.

Several factors may reduce the effective path length in the spectroscopy gas cell 100 during operation. Misalignment of the first mirror 110 or the second mirror 114 may affect the number of bounces that occur between the mirrors, potentially causing light to exit the chamber 104 after fewer reflections than intended. In Herriott cell configurations, misalignment may result in a different number of bounces before the light exits, thereby altering the effective path length from its designed value.

Dust accumulation on the surfaces of the first mirror 110 or the second mirror 114 may cause scattering losses during the multiple reflections that occur within the chamber 104. These scattering losses may reduce the intensity of light that completes the full series of reflections, effectively reducing the contribution of longer optical paths to the overall absorption measurement. The presence of dust within the chamber 104 may also cause absorption and scattering losses as light travels between the first mirror 110 and the second mirror 114. These losses may accumulate over the multiple reflections, leading to a reduction in the effective path length compared to the theoretical maximum based on the mirror spacing and reflectivity.

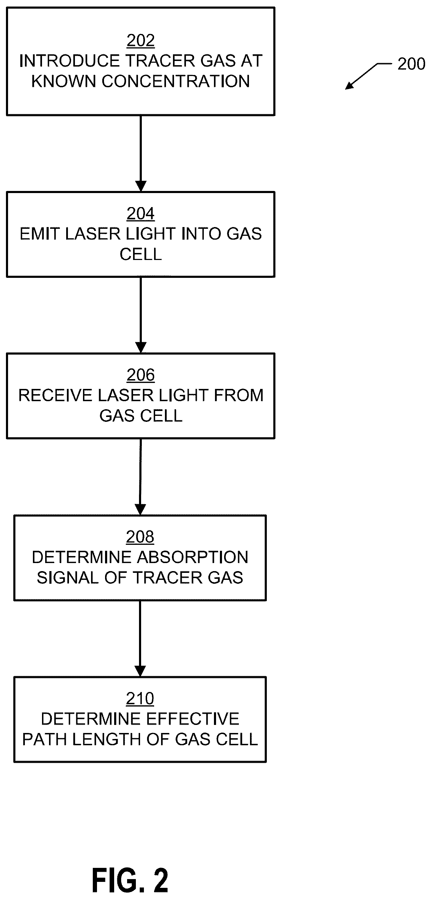

Referring to FIG. 2, a method 200 may be used for determining an effective path length of a gas cell in dual frequency comb spectroscopy. The method 200 may provide a technique for monitoring gas cell performance by utilizing a tracer gas with known properties to calculate the effective path length during spectroscopic measurements.

The method 200 may begin with block 202, where a tracer gas of a known concentration and a known absorption spectrum may be introduced into the gas cell. The tracer gas may be selected to have well-characterized absorption properties that can be measured simultaneously with target gases of interest. In some cases, the tracer gas may be chosen such that the known absorption spectrum of the tracer gas does not interfere with a known absorption spectrum of any one of one or more target gases being monitored.

Several types of tracer gases may be suitable for use in the method 200. Humidity in ambient air may serve as a tracer gas, where the concentration of water vapor may be measured using external humidity sensors before introduction into the gas cell. Carbon dioxide (CO2) may be used as a tracer gas when humidity is problematic due to condensation issues within the gas cell. CO2 concentrations may be measured by external point sensors and used to determine the effective path length. Methane (CH4) may serve as a tracer gas that has a strong absorption signal and can be delivered in exact quantities without condensing or sticking anywhere in the gas cell.

The method 200 may proceed to block 204, where laser light from a dual frequency comb may be emitted into the gas cell. The dual frequency comb may generate broadband laser light that covers the absorption spectra of both the tracer gas and the target gases being monitored. The laser light may travel through the chamber 104 of the spectroscopy gas cell 100, reflecting between the first mirror 110 and the second mirror 114 to achieve an extended optical path length.

As shown in FIG. 2, the method 200 may continue to block 206, where the laser light from the gas cell may be received. The received laser light may contain absorption features corresponding to both the tracer gas and any target gases present within the chamber 104. The intensity and spectral characteristics of the received laser light may be affected by the absorption that occurs as the light travels through the gas sample over the effective path length.

The method 200 may advance to block 208, where a signal corresponding to absorption of the laser light by the tracer gas may be determined using the received laser light. The absorption signal may be isolated from the overall spectral measurement by analyzing the specific wavelength regions where the tracer gas absorbs light. Since the absorption spectrum of the tracer gas may be known, the specific absorption features can be identified and quantified from the received laser light.

The method 200 may conclude with block 210, where the effective path length of the gas cell may be determined using the determined signal and the known concentration of the tracer gas. The absorption signal may be proportional to the product of the tracer gas concentration, the absorption cross-section of the tracer gas, and the effective path length. Since the concentration and absorption characteristics of the tracer gas may be known, the effective path length can be calculated from the measured absorption signal.

In some cases, introducing the tracer gas into the gas cell may comprise measuring a concentration of the tracer gas in ambient air, and introducing the ambient air into the gas cell through the inlet 106. This approach may be particularly useful when using naturally occurring gases such as humidity or CO2 as tracer gases. The ambient air containing the tracer gas may be introduced directly into the chamber 104, eliminating the need for separate tracer gas delivery systems.

The method 200 may include introducing enough of the tracer gas to purge ambient air from the gas cell. In some cases, a controlled amount of tracer gas may be introduced to ensure that the concentration within the chamber 104 reaches a known level that provides sufficient absorption signal for accurate path length determination.

The method 200 may further comprise determining one or more signals corresponding to absorption of one or more target gases using the received laser light. Once the effective path length has been determined using the tracer gas, concentrations of target gases may be calculated using the determined effective path length and the absorption signals of the target gases. This approach may enable simultaneous monitoring of gas cell performance and target gas concentrations.

The method 200 may be applied to various types of gas cells, including resonant gas cells where the effective path length may depend on factors such as mirror reflectivity and cavity alignment. In resonant gas cell applications, the method 200 may provide real-time monitoring of path length variations that could affect the accuracy of gas concentration measurements.

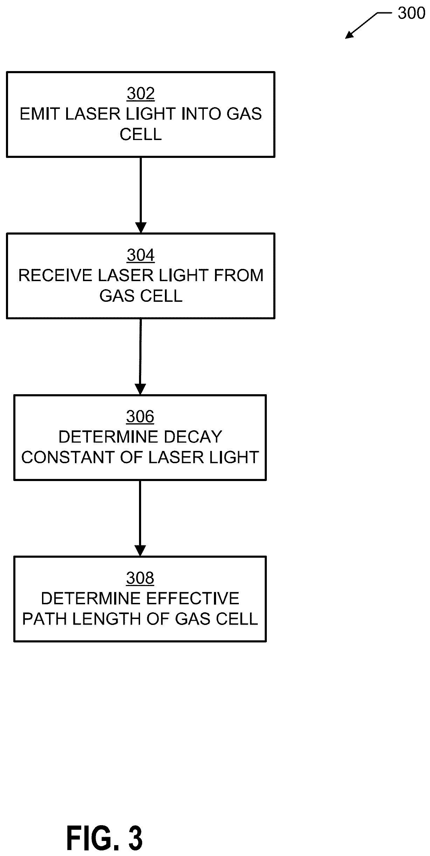

Referring to FIG. 3, a method 300 may provide an alternative approach for determining an effective path length of a gas cell in dual frequency comb spectroscopy using cavity ring down principles. The method 300 may utilize the decay characteristics of laser light within the gas cell to calculate the effective path length without requiring introduction of tracer gases.

The method 300 may begin with block 302, where laser light may be emitted into the gas cell. The laser light may comprise short pulses that can be coupled into the spectroscopy gas cell 100 and allowed to bounce between the first mirror 110 and the second mirror 114. In some cases, the laser light may be emitted from the dual frequency comb system used for spectroscopic measurements. Alternatively, the laser light may be emitted from a laser light source separate from the dual frequency comb.

When using a separate laser light source, the wavelength of the laser light may be selected to avoid interference with target gas measurements. For example, when the dual frequency comb operates from 1.5 to 1.7 microns, a separate laser light source may operate at wavelengths of 1.4 microns or 1.8 microns. The wavelength of the laser light may be selected such that the wavelength of the laser light does not interfere with a known absorption spectrum of any one of one or more target gases being monitored within the chamber 104.

The method 300 may proceed to block 304, where the laser light from the gas cell may be received. As the laser light bounces between the first mirror 110 and the second mirror 114, a portion of the light may leak out of the chamber 104 with each reflection due to the finite reflectivity of the mirrors. The received laser light may comprise a series of pulses with decreasing amplitude, where each pulse corresponds to light that has completed a different number of round trips between the mirrors.

As shown in FIG. 3, the method 300 may continue to block 306, where a decay constant of the laser light may be determined. The decay constant may be calculated by analyzing the exponential decrease in intensity of the successive pulses that exit the chamber 104. The decay constant may depend on optical losses within the chamber 104, including losses due to mirror reflectivity, scattering from dust or contaminants, and absorption by gases present in the chamber 104.

The method 300 may conclude with block 308, where the effective path length of the gas cell may be determined using the determined decay constant. The decay constant may be proportional to the optical losses within the chamber 104, which may be related to the effective path length through mathematical relationships that account for mirror reflectivity and cavity geometry. In resonant gas cells, the effective path length may be calculated from the decay constant using established cavity ring down spectroscopy principles.

Prior to emitting laser light into the gas cell, the method 300 may comprise purging gas from the gas cell to remove gases that could interfere with the decay measurements. The method 300 may further comprise introducing nitrogen gas into the gas cell prior to emitting laser light. Nitrogen gas may provide a non-absorbing medium that allows accurate measurement of optical losses due to scattering and mirror reflectivity without interference from gas absorption.

In some cases, the method 300 may utilize picosecond pulses for cavity ring down measurements instead of nanosecond pulses. Picosecond pulses may provide improved temporal resolution for measuring the decay characteristics of light within the chamber 104. The shorter pulse duration may enable more precise determination of the decay constant, particularly in gas cells with high mirror reflectivity where the decay time may be relatively long.

The method 300 may employ Fourier transform filtering to isolate spectral regions with no gas absorption for cavity ring down measurements. When target gases are present within the chamber 104, Fourier transform techniques may be used to filter the received laser light and analyze only wavelength regions where no absorption occurs. This approach may enable simultaneous measurement of the effective path length while target gases are present in the chamber 104.

The method 300 may introduce a third pulse inside the cavity at wavelengths not absorbed by any target gases for simultaneous ring down measurements. The third pulse may be generated at wavelengths that fall between the absorption lines of target gases, allowing cavity ring down measurements to be performed without interference from gas absorption. This approach may enable continuous monitoring of gas cell performance during normal spectroscopic operation.

The method 300 may further comprise determining one or more signals corresponding to absorption of one or more target gases using the received laser light. Once the effective path length has been determined using the decay constant, concentrations of target gases may be calculated using the determined effective path length and the absorption signals of the target gases. This approach may provide real-time monitoring of both gas cell performance and target gas concentrations.

The method 300 may be particularly applicable to resonant gas cells where the effective path length may depend on cavity alignment and mirror condition. In resonant gas cell applications, the cavity ring down approach may provide a calibration-free method for determining effective path length that does not depend on initial light intensity or external calibration standards.

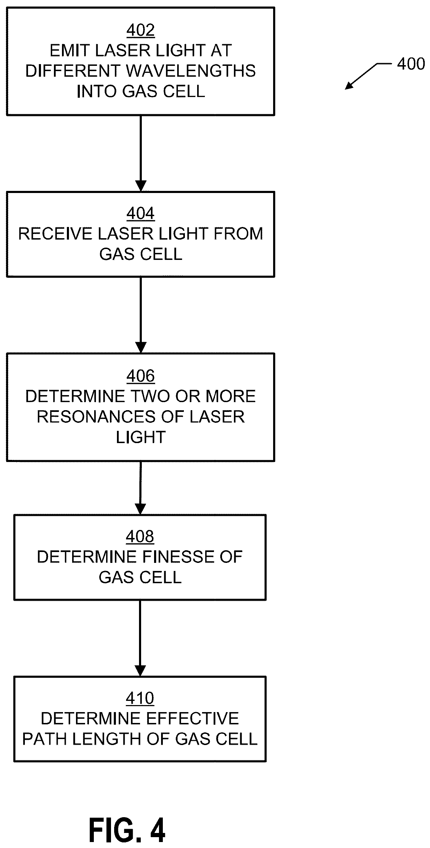

Referring to FIG. 4, a method 400 may provide a third approach for determining an effective path length of a gas cell in dual frequency comb spectroscopy using finesse measurements. The method 400 may utilize resonance characteristics of laser light within the gas cell to calculate the effective path length through analysis of cavity optical properties.

The method 400 may begin with block 402, where laser light at a plurality of different wavelengths may be emitted into the gas cell. The laser light may be scanned across multiple wavelengths to probe the resonance characteristics of the spectroscopy gas cell 100. In some cases, a narrow wavelength laser may co-travel with the dual frequency comb light to scan across cavity resonances while the dual frequency comb performs spectroscopic measurements of target gases.

The plurality of different wavelengths of the laser light may be selected such that the wavelengths of the laser light do not interfere with a known absorption spectrum of any one of one or more target gases being monitored within the chamber 104. For example, when monitoring specific toxic gases in semiconductor manufacturing applications, the scanning wavelengths may be chosen to fall in spectral regions where the target gases do not exhibit absorption features. This wavelength selection may enable simultaneous finesse measurements and target gas monitoring without interference between the two measurement processes.

The laser light may be emitted from the dual frequency comb or from a laser light source separate from the dual frequency comb. When using a separate laser light source, the scanning laser may operate at wavelengths close to the dual frequency comb wavelengths to ensure that scattering and optical losses measured during finesse determination accurately represent the conditions experienced by the dual frequency comb light during gas concentration measurements.

The method 400 may proceed to block 404, where the laser light from the gas cell may be received. As the scanning laser wavelength changes, the transmitted light intensity may vary according to the resonance characteristics of the spectroscopy gas cell 100. The received laser light may exhibit transmission peaks at specific wavelengths that correspond to cavity resonances, where constructive interference occurs between light reflections from the first mirror 110 and the second mirror 114.

As shown in FIG. 4, the method 400 may continue to block 406, where two or more resonances of the laser light may be determined. The resonances may appear as peaks in the transmission spectrum when the laser wavelength is scanned across the cavity resonance frequencies. Each resonance may correspond to a specific wavelength where the optical path length between the first mirror 110 and the second mirror 114 equals an integer multiple of half wavelengths, resulting in constructive interference and enhanced transmission through the chamber 104.

The method 400 may advance to block 408, where a finesse of the gas cell may be determined. The finesse may be calculated using the mathematical relationship between the spacing of adjacent resonances and the width of individual resonances. The finesse of the gas cell may be determined as a distance between two adjacent ones of the two or more resonances divided by a width of one of the two or more resonances. This mathematical formula may provide a quantitative measure of the cavity quality and optical performance.

The finesse measurement may depend on the reflectivity of the first mirror 110 and the second mirror 114 within the spectroscopy gas cell 100. Higher mirror reflectivity may result in sharper resonances with smaller widths, leading to higher finesse values. Conversely, optical losses due to dust accumulation, scattering, or mirror degradation may broaden the resonances and reduce the finesse value. The finesse measurement may therefore provide an indication of the optical health and performance of the gas cell.

The method 400 may conclude with block 410, where the effective path length of the gas cell may be determined using the determined finesse. The finesse may be related to the effective path length through established mathematical relationships that account for mirror reflectivity, cavity geometry, and optical losses. The effective path length calculation may utilize the finesse value along with the physical dimensions of the chamber 104 and the known optical properties of the first mirror 110 and the second mirror 114.

The method 400 may be particularly applicable to Fabry-Perot gas cells where the resonance characteristics may be well-defined and predictable. In Fabry-Perot configurations, the spectroscopy gas cell 100 may function as an optical resonator with two parallel reflecting surfaces that create standing wave patterns at specific wavelengths. The finesse measurement may provide direct information about the cavity performance and effective path length in such configurations.

The narrow wavelength scanning laser used in the method 400 may be configured to scan across cavity resonances while maintaining co-propagation with the dual frequency comb light through the same optical path within the chamber 104. This co-traveling arrangement may ensure that the finesse measurements accurately reflect the optical conditions experienced by the dual frequency comb light during gas concentration measurements. The scanning laser may be coupled into the spectroscopy gas cell 100 through the same optical input as the dual frequency comb, allowing both measurement systems to probe the same optical path.

The method 400 may further comprise determining one or more signals corresponding to absorption of one or more target gases using the received laser light. Once the effective path length has been determined using the determined finesse, concentrations of target gases may be calculated using the determined effective path length and the absorption signals of the target gases. This approach may enable simultaneous monitoring of gas cell optical performance and target gas concentrations without requiring separate measurement cycles.

The finesse-based approach of the method 400 may provide advantages in applications where tracer gas introduction is not practical or where cavity ring down measurements may be affected by gas absorption. The method 400 may offer a non-invasive technique for monitoring gas cell performance that does not require modification of the gas composition within the chamber 104 or interruption of normal spectroscopic operation.

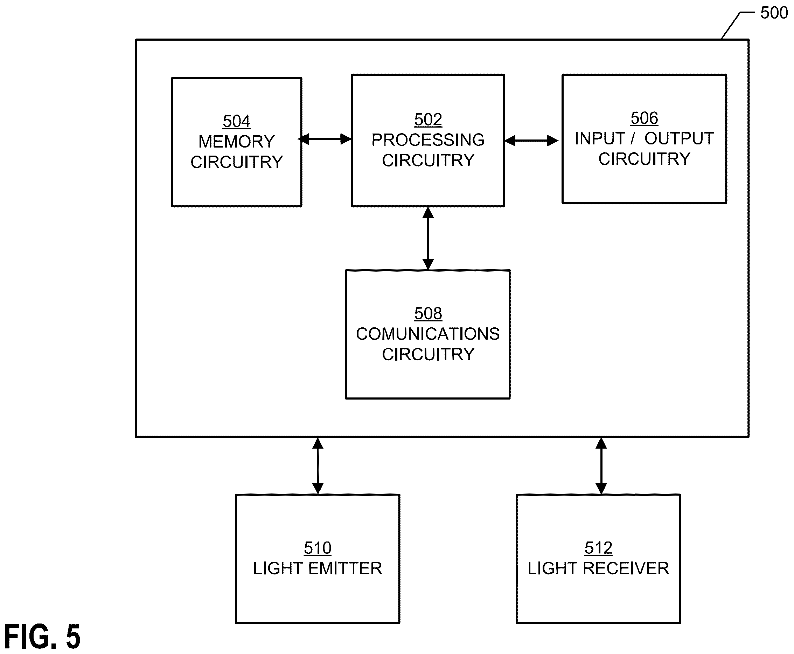

Referring to FIG. 5, a control device 500 may be configured to coordinate and manage the operation of dual frequency comb spectroscopy systems for performing path length measurements and gas concentration detection. The control device 500 may provide centralized control and data processing capabilities for implementing the various methods described herein for determining effective path length of gas cells.

The control device 500 may include processing circuitry 502 that serves as the computational core for executing path length determination algorithms and gas concentration calculations. The processing circuitry 502 may be configured to implement the mathematical operations required for analyzing absorption signals, decay constants, and finesse measurements as described in the various methods. In some cases, the processing circuitry 502 may comprise one or more microprocessors, digital signal processors, or field-programmable gate arrays that can perform real-time analysis of spectroscopic data.

As shown in FIG. 5, the control device 500 may include memory circuitry 504 that may be communicatively coupled to the processing circuitry 502 via bidirectional connections. The memory circuitry 504 may store data and instructions that can be accessed by the processing circuitry 502 during operation of the dual frequency comb spectroscopy system. The memory circuitry 504 may contain calibration data for tracer gases, absorption cross-section values, and reference spectra that may be used in the path length determination calculations. In some cases, the memory circuitry 504 may store historical path length measurements and gas concentration data for trend analysis and system health monitoring.

The control device 500 may include input/output circuitry 506 that may be communicatively coupled to the processing circuitry 502 via bidirectional connections. The input/output circuitry 506 may provide an interface for external communication and data transfer with the control device 500. The input/output circuitry 506 may enable connection to external sensors for measuring tracer gas concentrations, such as humidity sensors or CO2 monitors that may be used in conjunction with the tracer gas method described in the method 200. In some cases, the input/output circuitry 506 may facilitate communication with safety monitoring systems in semiconductor manufacturing environments where toxic gas detection may be performed.

The control device 500 may include communications circuitry 508 that may be communicatively coupled to the processing circuitry 502 via bidirectional connections. The communications circuitry 508 may facilitate communication between the control device 500 and external components of the dual frequency comb spectroscopy system. The communications circuitry 508 may coordinate data exchange between the processing circuitry 502 and optical components used for spectroscopic measurements and path length determination.

As further shown in FIG. 5, the control device 500 may be connected to a light emitter 510 and a light receiver 512 that may be positioned outside the main enclosure of the control device 500. The light emitter 510 may be coupled to the communications circuitry 508 via bidirectional connections, enabling the control device 500 to control light emission for spectroscopy measurements and path length determination operations. The light emitter 510 may comprise dual frequency comb laser sources for generating broadband laser light used in gas concentration measurements, as well as additional laser sources for cavity ring down measurements or finesse determination as described in the method 300 and the method 400.

The light receiver 512 may be coupled to the communications circuitry 508 via bidirectional connections, allowing the control device 500 to receive optical signals and process spectroscopic data. The light receiver 512 may comprise photodetectors, spectrometers, or other optical sensing components configured to detect laser light transmitted through or reflected from the spectroscopy gas cell 100. The light receiver 512 may capture absorption signals from tracer gases, decay characteristics for cavity ring down measurements, and resonance patterns for finesse calculations.

The control device 500 may coordinate the operation of the light emitter 510 and the light receiver 512 to perform gas cell path length measurements according to the various methods described herein. For implementation of the method 200, the control device 500 may control the light emitter 510 to generate dual frequency comb light while simultaneously monitoring tracer gas absorption signals through the light receiver 512. The processing circuitry 502 may analyze the received absorption data to calculate effective path length using the known concentration and absorption characteristics of the tracer gas.

For implementation of the method 300, the control device 500 may control the light emitter 510 to generate short laser pulses for cavity ring down measurements while coordinating with the light receiver 512 to capture the decay characteristics of light exiting the chamber 104. The processing circuitry 502 may analyze the exponential decay patterns to determine decay constants and calculate effective path length based on cavity ring down principles.

For implementation of the method 400, the control device 500 may control the light emitter 510 to scan laser wavelengths across cavity resonances while the light receiver 512 captures transmission spectra for finesse analysis. The processing circuitry 502 may identify resonance peaks, calculate finesse values, and determine effective path length based on the measured cavity optical properties.

The control device 500 may enable simultaneous operation of multiple path length determination methods to provide redundant measurements and enhanced accuracy. The processing circuitry 502 may compare results from different methods to detect inconsistencies that could indicate gas cell degradation or measurement errors. In some cases, the control device 500 may automatically switch between different path length measurement approaches based on operating conditions or gas cell configuration.

The communications circuitry 508 may facilitate real-time data exchange between the control device 500 and external monitoring systems in safety applications. When toxic gas concentrations exceed predetermined thresholds, the control device 500 may transmit alarm signals through the communications circuitry 508 to initiate appropriate safety responses. The control device 500 may also provide continuous monitoring data for compliance reporting and system health assessment in semiconductor manufacturing or other industrial applications.

The disclosed methods for determining effective path length in dual frequency comb spectroscopy systems may provide several benefits for gas detection applications, particularly in safety-critical environments where accurate monitoring of toxic substances may be required. These methods may enable improved measurement accuracy through continuous or periodic verification of gas cell performance, ensuring that concentration calculations remain reliable throughout extended operation periods.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A method for determining an effective path length of a gas cell in dual frequency comb (DFC) spectroscopy, the method comprising:
introducing a tracer gas of a known concentration a known absorption spectrum into the gas cell;
emitting laser light from a DFC into the gas cell;
receiving the laser light from the gas cell;
determining, using the received laser light, a signal corresponding to absorption of the laser light by the tracer gas; and
determining the effective path length of the gas cell using the determined signal and the known concentration of the tracer gas.

2. The method of claim 1, wherein the tracer gas is selected such that the known absorption spectrum of the tracer gas does not interfere with a known absorption spectrum of any one of one or more target gases.

3. The method of claim 1, further comprising measuring a concentration of the tracer gas in ambient air;
wherein introducing the tracer gas into the gas cell comprises introducing the ambient air into the gas cell.

4. The method of claim 1, further comprising:
determining, using the received laser light, one or more signals corresponding to absorption of one or more target gases; and
determining a concentration of each of the one or more target gases in the gas cell using the determined effective path length of the gas cell and the determined one or more signals.

5. The method of claim 1, wherein introducing the tracer gas into the gas cell comprises introducing enough of the tracer gas to purge ambient air from the gas cell.

6. A method for determining an effective path length of a gas cell in dual frequency comb (DFC) spectroscopy, the method comprising:
emitting laser light into the gas cell;
receiving the laser light from the gas cell;
determining a decay constant of the laser light; and
determining the effective path length of the gas cell using the determined decay constant.

7. The method of claim 6, wherein a wavelength of the laser light is selected such that the wavelength of the laser light does not interfere with a known absorption spectrum of any one of one or more target gases.

8. The method of claim 6, further comprising:
determining, using the received laser light, one or more signals corresponding to absorption of one or more target gases; and
determining a concentration of each of the one or more target gases in the gas cell using the determined effective path length of the gas cell and the determined one or more signals.

9. The method of claim 6, further comprising, prior to emitting laser light into the gas cell, purging gas from the gas cell.

10. The method of claim 6, further comprising, prior to emitting laser light into the gas cell, introducing nitrogen gas into the gas cell.

11. A method for determining an effective path length of a gas cell in dual frequency comb (DFC) spectroscopy, the method comprising:
emitting laser light at a plurality of different wavelengths into the gas cell;
receiving the laser light from the gas cell;
determining two or more resonances of the laser light;
determining a finesse of the gas cell; and
determining the effective path length of the gas cell using the determined finesse.

12. The method of claim 11, wherein the finesse of the gas cell is determined as a distance between two adjacent ones of the two or more resonances divided by a width of one of the two or more resonances.

13. The method of claim 11, wherein the plurality of different wavelengths of the laser light is selected such that the wavelengths of the laser light do not interfere with a known absorption spectrum of any one of one or more target gases.

14. The method of claim 11, wherein the laser light is emitted from the DFC or from a laser light source separate from the DFC.

15. The method of claim 11, further comprising:
determining, using the received laser light, one or more signals corresponding to absorption of one or more target gases; and
determining a concentration of each of the one or more target gases in the gas cell using the determined effective path length of the gas cell and the determined one or more signals.
